(19) Europäisches Patentamt
European Patent Office
Office européen des brevets

(11) **EP 4 335 982 B1**

(12) **EUROPÄISCHE PATENTSCHRIFT**

(45) Veröffentlichungstag und Bekanntmachung des Hinweises auf die Patenterteilung:
**04.06.2025 Patentblatt 2025/23**

(21) Anmeldenummer: **23195582.4**

(22) Anmeldetag: **06.09.2023**

(51) Internationale Patentklassifikation (IPC):
***E02F 9/22*** *(2006.01)*      ***F16H 61/00*** *(2006.01)*
***E02F 9/20*** *(2006.01)*

(52) Gemeinsame Patentklassifikation (CPC):
**E02F 9/2246; E02F 9/2095; E02F 9/22; E02F 9/2228; E02F 9/2235; E02F 9/2292; F02D 29/04; F16H 61/475;** E02F 9/2066; E02F 9/207; E02F 9/2253; F02D 2200/0614; F02D 2200/10; F02D 2200/101; F02D 2250/18;
(Forts.)

(54) **VERFAHREN ZUR STEUERUNG EINER MOBILEN ARBEITSMASCHINE**

METHOD FOR CONTROLLING A MOBILE WORKING MACHINE

PROCÉDÉ DE COMMANDE D'UNE MACHINE DE TRAVAIL MOBILE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **12.09.2022 DE 102022209466**

(43) Veröffentlichungstag der Anmeldung:
**13.03.2024 Patentblatt 2024/11**

(73) Patentinhaber: **Robert Bosch GmbH 70442 Stuttgart (DE)**

(72) Erfinder:
- **Gloeckler, Manfred**
  **89278 Nersingen (DE)**
- **Mueller, Matthias**
  **89129 Langenau (DE)**
- **Brix, Norman**
  **89340 Leipheim (DE)**
- **Herrmann, Ronny**
  **89129 Langenau (DE)**
- **Alberti, Andrea**
  **89077 Ulm (DE)**

(56) Entgegenhaltungen:
EP-A1- 2 333 157      DE-A1- 102013 214 732
DE-A1- 102018 218 024

(52)  Gemeinsame Patentklassifikation (CPC): (Forts.)
      F15B 2211/20523; F15B 2211/20546;
      F15B 2211/6651; F15B 2211/6652;
      F15B 2211/7142; F15B 2211/781; F16H 61/4078

**Beschreibung**

TECHNISCHER BEREICH

Die Erfindung betrifft ein Verfahren zur Steuerung einer mobilen Arbeitsmaschine, wobei die Arbeitsmaschine mindestens einen Antriebsmotor (z.B. ein elektrischer Motor oder ein Verbrennungsmotor) als Leistungsquelle und mindestens zwei Leistungsteilnehmer umfasst, die jeweils konfiguriert sind, Energie von dem Verbrennungsmotor zu erhalten und diese in eine Arbeitsaufgabe und/oder in eine Fahraufgabe der Arbeitsmaschine umzuwandeln.

STAND DER TECHNIK

Aus dem Stand der Technik sind Arbeitsmaschinen bekannt, bei der die Energie, die mittels eines Antriebsmotors erzeugt wird, durch mehrere Leistungsteilnehmer zugeteilt wird. Beispiele von solchen Leistungsteilnehmern können eine Arbeitshydraulik, ein Fahrantrieb (elektrisch oder hydraulisch) oder eine elektrische Vorrichtung sein, die eine elektrische Maschine umfasst, die ggf. die mechanische Energie von dem Verbrennungsmotor in elektrische Energie umwandelt, sodass verschiedene Arbeitsfunktionen der Arbeitsmaschine (wie z.B. Klimaanlage, Kühlung der verschiedenen Komponenten etc.) ausgeführt werden können.

Eine grundlegende Art, in einer mobilen Arbeitsmaschine Leistung zu verteilen, ist beispielsweise ein als "Inchpedal" bekanntes Bedienelement. Durch die vom Bediener gewählte Einstellung des Pedals wird die Antriebsleistung, die der Arbeitsmaschine zur Verfügung steht, zwischen der Fahr- und den Arbeitsfunktionen (verschiedene Leistungsteilnehmer) aufgeteilt.

Um eine Überlastung des Motors zu vermeiden sind aus dem Stand der Technik verschiedene Arten von Energiemanagementstrategien bekannt, die auf die Optimierung der Leistungsteilnehmer fokussieren.

Für eine Leistungsbegrenzung greifen bekannte Energiemanagement-Strategien reaktiv ein, indem bei beginnender Überlastung ein betroffener Leistungsteilnehmer individuell durch Eingriff seiner funktionalen Steuerung in der Leistungsaufnahme limitiert wird. Im Falle hydrostatischer Fahrantriebe erfolgt diese Begrenzung der Leistungsaufnahme indirekt, über eine Begrenzung des Verdrängungsvolumens der Hydromaschine(n). Eine solche Lösung ist beispielsweise aus dem Hause der Anmelderin als LLC Load Limit Control für einen Fahrantrieb mit Arbeitshydraulik bekannt. Allerdings hat diese Grenzlastregelstrategie in der Regel nur einseitige Wirkung auf einen Verbraucher, das bedeutet, dass keine einstellbare Leistungsverteilung stattfinden kann.

Seitens der Antriebsmaschine sind Lösungen bekannt, bei denen eine Drehzahl-Vorgabe für die Antriebsmaschine einer fest vorgegebenen Interpretation eines Fahrerwunsches folgt, wobei eine anschließende Drehzahlreduzierung beispielsweise in einem gewählten "Eco-Mode" möglich ist. Ein Leistungsmanagement findet hierbei nicht statt.

Die Druckschrift DE 10 2013 214 732 A1 der Anmelderin zeigt demgegenüber ein proaktives Energie- bzw. Leistungsmanagement des Fahrantriebes und der Arbeitshydraulik einer mobilen Arbeitsmaschine. Dafür sind ein übergeordneter Gesamtenergiekoordinator (GEK) und mit ihm signalverbundene, untergeordnete Verbraucherenergiekoordinatoren (VEK) vorgesehen. Letztgenannte sind jeweils einem oder mehreren Verbrauchern zugeordnet, die beispielsweise hydrostatischer, mechanischer oder elektrischer Natur sind, und die die Fahrfunktion, Arbeitsfunktionen und sonstige Hilfsfunktionen erfüllen. Der GEK kommuniziert mit den VEKs und mit einer Steuerung der Antriebsmaschine und ermittelt einen Gesamtleistungsbedarf der Verbraucher und eine verfügbare Gesamtleistung der Antriebsmaschine. Der GEK greift insbesondere im Falle einer Leistungs-Unterversorgung der Verbraucher ein und begrenzt deren Leistungsaufnahme, sodass nicht mehr Leistung verbraucht wird, als zur Verfügung steht.

Alle beschriebenen Energiemanagement-Strategien haben den Nachteil, dass die Berechnung sehr komplex ist und das System sehr schwierig anzupassen ist, falls kleine Änderungen bei den Leistungsteilnehmern der mobilen Arbeitsmaschine stattfinden. Darüber hinaus erfordern solche Strategien initial einen hohen Analyse- und Modellaufwand.

Demgegenüber liegt der Erfindung die Aufgabe zugrunde, ein Verfahren zur Steuerung einer Arbeitsmaschine zu schaffen, die eine sehr einfache Leistungsbegrenzung der Leistungsteilnehmer ermöglicht, insbesondere eine einfache, aber skalierbare Leistungsverteilung ohne Modell- und Analyseaufwand.

KURZE BESCHREIBUNG DER FIGUREN

Die vorliegende Erfindung wird unter Bezugnahme auf die beigefügten Figuren beschrieben, wobei sich gleiche Bezugszeichen auf gleiche Teile und / oder auf ähnliche Teile und / oder auf entsprechende Teile des Systems beziehen. Zu den Figuren:

Figur 1 zeigt einen schematischen Überblick über die Steuerungsstruktur für eine mobile Arbeitsmaschine, Komponenten der Steuerungsstruktur und mögliche Signalflüsse zwischen den Komponenten gemäß einem Ausführungsbeispiel der vorliegenden Erfindung,

Figur 2 zeigt ein Verfahren zur Leistungslimitierung der in Figur 1 dargestellten Leistungsteilnehmer gemäß einem Ausführungsbeispiel der vorliegenden Erfindung.

DETAILLIERTE BESCHREIBUNG

Im Folgenden wird die vorliegende Erfindung unter Bezugnahme auf bestimmte Ausführungsformen beschrieben, wie sie in den beigefügten Figuren gezeigt sind. Nichtsdestotrotz ist die vorliegende Erfindung nicht auf die besonderen Ausführungsformen beschränkt, die in der folgenden detaillierten Beschreibung beschrieben und in den Figuren gezeigt sind, sondern die beschriebenen Ausführungsformen veranschaulichen lediglich einige Aspekte der vorliegenden Erfindung, deren Schutzbereich durch die Ansprüche definiert ist.

Weitere Änderungen und Variationen der vorliegenden Erfindung sind für den Fachmann klar. Die vorliegende Beschreibung umfasst somit alle Änderungen und / oder Variationen der vorliegenden Erfindung, deren Schutzbereich durch die Ansprüche definiert ist.

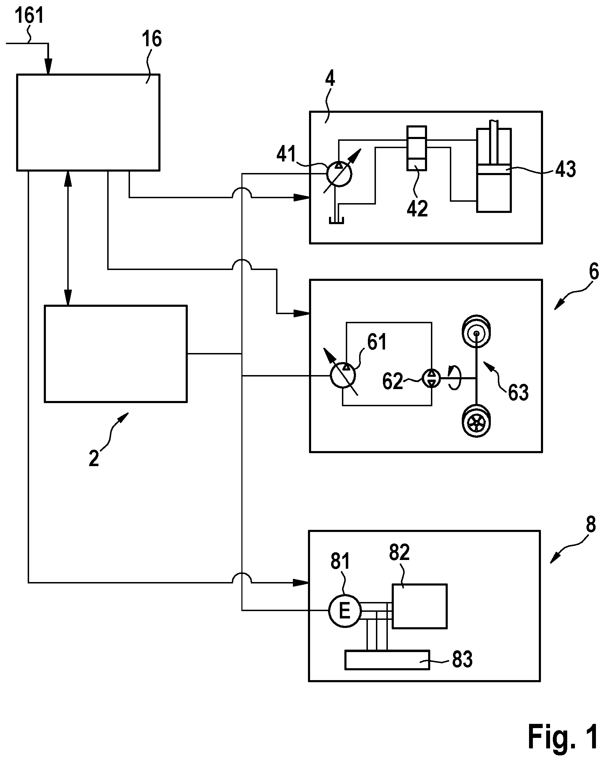

Gemäß Fig. 1 umfasst die Arbeitsmaschine drei verschiedene Leistungsteilnehmer 4, 6, 8, die jeweils konfiguriert sind, Energie von einem Antriebmotor 2 (von nun der Einfachheit halber als Motor bezeichnet) zu erhalten und diese in eine Arbeitsaufgabe und/oder in eine Fahraufgabe der Arbeitsmaschine umzuwandeln. Wie im Verlauf der Beschreibung klarer wird, kann diese Erfindung sowohl mit einem Verbrennungsmotor (z.B. ein Dieselmotor) als auch mit einem elektrischen Motor angewendet werden.

Ein erster Leistungsteilnehmer 4 ist ein Arbeitsverbraucher, der mit einer Hydropumpe 41 zur Druckmittelversorgung mindestens eines Aktuators 43 versehen ist, wobei der durch die Hydropumpe 41 erzeugte Druck mittels des Aktuators 43 eine Bewegung einer Arbeitskinematik der mobilen Arbeitsmaschine ermöglicht. Der Aktuator kann z.B. benutzt werden, um einen Ausleger oder einen Arm der Arbeitsmaschine zu bewegen. Die Steuerung der Bewegung des Aktuators ist durch das Proportionalventil 42 ausgeführt.

Ein zweiter Leistungsteilnehmer 6 ist ein hydraulischer Fahrverbraucher, der mit einer Hydropumpe 61 zur Druckmittelversorgung eines mit einem Abtrieb 63 koppelbaren Hydromotors 62 versehen ist, wobei der durch die Hydropumpe 61 erzeugte Druck mittels des Hydromotors 62 eine Bewegung entlang einer Fahrtrichtung der mobilen Arbeitsmaschine ermöglicht. Alternativ kann der Fahrverbraucher ein elektrischer Fahrverbraucher sein.

Ein dritter Leistungsteilnehmer 8 ist ein Arbeitsverbraucher, der einen elektrischen Motor 81 umfasst. Der elektrische Motor ist ggf. konfiguriert, die mechanische Energie des Verbrennungsmotors 2 in elektrische Energie umzuwandeln, sodass verschiedene Arbeitsfunktionen 83 der Arbeitsmaschine (wie z.B. Klimaanlage, Kühlung der verschiedenen Komponenten etc.) ausgeführt werden können oder Energie in eine Batterie 82 gespeichert werden kann.

Es ist dem Fachmann klar, dass die Zahl der Leistungsteilnehmer größer oder kleiner als drei sein kann (aber mindestens gleich zwei). Es können auch mehrere der beschriebenen Leistungsteilnehmer benutzt werden. Z.B., gemäß einer Ausführungsform der vorliegenden Erfindung können mindestens zwei der Arbeitsverbraucher 4 benutzt werden, um zwei verschiedene Elemente der Arbeitskinematik unabhängig voneinander zu bewegen.

Die drei Leistungsteilnehmer sind signalverbunden mit einer Steuerung 16. Die Steuerung 16 ist konfiguriert Informationen 161 von mindestens einer Eingabeeinheit zu erhalten. Die Eingabeeinheit kann z.B. eine Mehrzahl von Joysticks umfassen, die konfiguriert sind, durch einen Fahrer Anforderungen für die verschiedenen Leistungsteilnehmer einzugeben, sodass die Arbeitsmaschine eine gewünschte Bewegung ausführen kann. Z.B. können durch die Eingabeeinheit Soll-Leistungsanforderungen für die Leistungsteilnehmer eingegeben werden.

Darüber hinaus ist die Steuerung mit dem Motor 2 signalverbunden. Insbesondere wird die Steuerung 16 eine aktuelle Drehzahl des Motors erfassen und eine Soll-Drehzahl Vorgabe an den Motor vorgeben, sodass der Motor 2 die von den Informationen 161 ermittelbaren Soll-Leistungsanforderungen liefern kann.

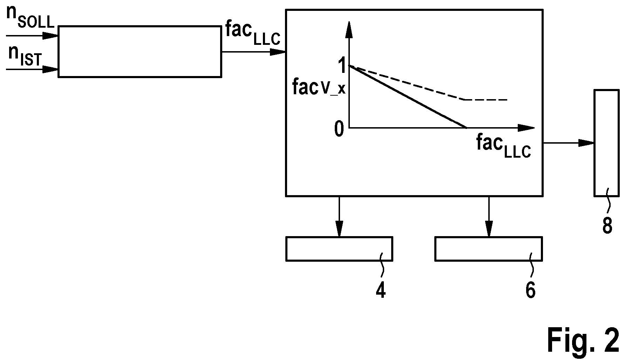

Figur 2 zeigt ein Verfahren zur Leistungslimitierung der in Figur 1 beschriebenen Leistungsteilnehmer gemäß einem Ausführungsbeispiel der vorliegenden Erfindung.

In einem ersten Schritt wird eine Belastung des Motors 2 in Form eines Belastungsfaktors $fac_{LLC}$ ermittelt.

Die Belastung kann basierend auf einem Unterschied zwischen einer aktuellen Drehzahl $n_{ist}$ und einer Soll-Drehzahl $n_{Soll}$ des Motors 2 ermittelt werden. Insbesondere, wenn die aktuelle Drehzahl $n_{ist}$ kleiner als die Soll-Drehzahl $n_{Soll}$ ist, wird ein Belastungsfaktor $fac_{LLC}$ größer als null ermittelt, da dieser Zustand einer Überlastung (in dem Fachgebiet bekannt als "Drückung") des Verbrennungsmotors 2 entspricht. Das bedeutet, dass der Belastungsfaktor $fac_{LLC}$ konfiguriert ist, eine Information über die Überlastung des Verbrennungsmotors zu geben. Für den Fall, dass eine Überlastung nicht erfasst wird (d.h. wenn die aktuelle Drehzahl $ni_{st}$ größer als die Soll-Drehzahl $n_{Soll}$ ist), wird der Belastungsfaktor $fac_{LLC}$ gleich null sein.

Es ist dem Fachmann klar, dass manche Toleranzen akzeptierbar sind. Gemäß einer Ausführungsform der vorliegenden Erfindung kann eine gewisse Toleranz (z.B. 200 rpm) für die Differenz zwischen der aktuellen Drehzahl $n_{ist}$ und der Soll-Drehzahl $n_{Soll}$ akzeptierbar sein. Erst dann, wenn die berechnete Differenz die vorgegebene Toleranz überschreitet, wird eine Überlastung ermittelt und ein Wert für den Belastungsfaktor $fac_{LLC}$ größer als null ermittelt.

Alternativ, für den Fall, dass der Motor 2 ein Verbrennungsmotor ist, kann die Belastung auf Basis von einer Einspritzmenge ermittelt werden (d.h. wie viel Kraftstoff in den Verbrennungsmotor eingespritzt wird). Umgewehrt, für den Fall, dass der Motor 2 ein elektrischer Motor ist, kann die Belastung auf Basis von einem Strom, der zu dem elektrischen Motor fließt, ermittelt werden.

Es ist deswegen dem Fachmann klar, dass diese Erfindung sich nicht auf eine bestimmte Art für die Ermittlung der Belastung des Motors beschränkt.

In einem weiteren Schritt wird ein Leistungsfaktor $facV\_x$ für jeden Leistungsteilnehmer 4, 6, 8 berechnet, wobei der Leistungsfaktor $facV\_x$ mittels einer dem jeweiligen Leistungsteilnehmer 4, 6, 8 zugeordneten Priorisierungsfunktion berechnet wird, wobei die jeweilige Priorisierungsfunktion einen Wert für den Leistungsfaktor $facV\,x$ abhängig von dem ermittelten Belastungsfaktor $fac_{LLC}$ und einem dem Leistungsteilnehmer zugeordneten Priorisierungsfaktor Pr_x, ermitteln kann.

In dem letzten Abschnitt war mit x ein beliebiger Teilnehmer gemeint. Es ist deswegen dem Fachmann klar, dass für den ersten Leistungsteilnehmer ein erster Leistungsfaktor $facV\_2$ abhängig von dem ermittelten Belastungsfaktor $fac_{LLC}$ und dem ersten Leistungsteilnehmer zugeordneten Priorisierungsfaktor Pr_2, ermittelt wird. Das gleiche gilt für die anderen Leistungsteilnehmer.

Die Summe der dem jeweiligen Leistungsteilnehmer zugeordneten Priorisierungsfaktoren Pr _x entspricht einer vollen Einheit. Das bedeutet, dass z.B. für den Fall, dass die Faktoren in Prozent berechnet werden, die Summe der Priorisierungsfaktoren 100 ergeben wird.

Für den Fall, dass unterschiedlich leistungsstarke Verbraucher an das System angeschlossen werden - z.B. ein Kehrbesen oder eine Schneefräse, ist es besonders wichtig, dass die Priorisierungsfaktoren anpassbar sind. Aus diesem Grund können die Priorisierungsfaktoren Pr _x während der Laufzeit durch den Fahrer oder übergeordnete Funktionen angepasst werden.

Die jeweilige Priorisierungsfunktion berechnet den Leistungsfaktor $facV\_x$ mit einer beliebigen Funktion. Für den Fall, dass eine lineare Funktion ausgewählt wird, kann der Leistungsfaktor $facV\_x$ für den jeweiligen Leistungsteilnehmer mit der folgenden Formel berechnet werden:

$$facV\_x = 1 - fac_{LLC} * (1 - \mathrm{Pr}\_x)$$

wobei $facV\_x$ *der* jeweilige Leistungsfaktor, $fac_{LLC}$ der Belastungsfaktor, $Pr\_x$ der jeweilige Priorisierungsfaktor ist.

In einem weiteren Schritt wird die Soll-Leistung für jeden Leistungsteilnehmer 4, 6, 8 auf Basis des jeweiligen Leistungsfaktors $facV\_x$ und einer jeweiligen angeforderten Leistung berechnet. Die Berechnung der Soll-Leistung für jeden Leistungsteilnehmer kann durch eine einfache Multiplikation des jeweiligen Leistungsfaktors $facV\_x$ und der jeweiligen angeforderten Leistung (die, wie schon beschrieben durch die Eingabeeinheit als Soll-Leistungsanforderung der Steuerung 16 bekannt ist) ermittelt werden. Die ermittelte Soll-Leistung wird dann an die Leistungsteilnehmer kommuniziert, sodass eine Leistungslimitierung stattfinden kann.

Während die vorliegende Erfindung unter Bezugnahme auf die oben beschriebenen Ausführungsformen beschrieben wurde, ist es für den Fachmann klar, dass es möglich ist, verschiedene Modifikationen, Variationen und Verbesserungen der vorliegenden Erfindung im Lichte der oben beschriebenen Lehre und innerhalb des Bereichs der beigefügten Ansprüche zu realisieren, ohne von dem Schutzbereich der Erfindung abzuweichen.

Darüber hinaus wurden die Bereiche, auf denen Fachleute kundig sein dürften, hier nicht beschrieben, um die beschriebene Erfindung nicht unnötig zu verschleiern.

Dementsprechend soll die Erfindung nicht durch die spezifischen veranschaulichenden Ausführungsformen beschränkt sein, sondern nur durch den Schutzbereich der beigefügten Ansprüche.

## Patentansprüche

1. Verfahren zur Steuerung einer mobilen Arbeitsmaschine, wobei die Arbeitsmaschine mit mindestens zwei Leistungsteilnehmern (4, 6, 8) versehen ist, die jeweils konfiguriert sind, Energie von einem Motor (2) zu erhalten und diese in eine Arbeitsaufgabe und/oder in eine Fahraufgabe der Arbeitsmaschine umzuwandeln, **dadurch gekennzeichnet, dass** das Verfahren folgende Schritte umfasst:

   a. Ermitteln einer Belastung des Motors (2) in Form eines Belastungsfaktors ($fac_{LLC}$);
   b. Berechnen eines Leistungsfaktors ($facV\,x$) für jeden Leistungsteilnehmer (4, 6, 8), wobei der Leistungsfaktor ($facV\_x$) mittels einer dem jeweiligen Leistungsteilnehmer (4, 6, 8) zugeordneten Priorisierungsfunktion berechnet wird, wobei die jeweilige Priorisierungsfunktion einen Wert für den Leistungsfaktor ($facV\,x$) abhängig von dem ermittelten Belastungsfaktor ($fac_{LLC}$) und einem dem jeweiligen Leistungsteilnehmer zugeordneten Priorisierungsfaktor (Pr_x), ermitteln kann;
   c. Berechnen einer Soll-Leistung für jeden Leistungsteilnehmer (4, 6, 8) auf Basis des jeweiligen Leistungsfaktors ($facV\_x$) und einer jeweiligen angeforderten Leistung.

2. Verfahren nach Anspruch 1, wobei die Belastung basierend auf einem Unterschied zwischen einer aktuellen Drehzahl ($n_{ist}$) und einer Soll-Drehzahl ($n_{Soll}$) des Motors (2) ermittelt wird.

3. Verfahren nach einem der Ansprüche 1 oder 2, wobei der Motor (2) ein elektrischer Motor ist.

**4.** Verfahren nach einem der Ansprüche 1 oder 2, wobei der Motor (2) ein Verbrennungsmotor ist.

**5.** Verfahren nach einem der Ansprüche 1 bis 4, wobei mindestens einer der mindestens zwei Leistungsteilnehmer (4, 6, 8) ein Fahrverbraucher (6) ist, der mit einer Hydropumpe (61) zur Druckmittelversorgung eines mit einem Abtrieb (63) koppelbaren Hydromotors (62) versehen ist, wobei der durch die Hydropumpe (61) erzeugte Druck mittels des Hydromotors (62) eine Bewegung entlang einer Fahrtrichtung der mobilen Arbeitsmaschine ermöglicht.

**6.** Verfahren nach einem der Ansprüche 1 bis 5, wobei mindestens einer der mindestens zwei Leistungsteilnehmer (4, 6, 8) ein Arbeitsverbraucher (8) ist, der einen elektrischen Motor (81) umfasst.

**7.** Verfahren nach einem der Ansprüche 1 bis 6, wobei mindestens einer der mindestens zwei Leistungsteilnehmer (4, 6, 8) ein Arbeitsverbraucher (4) ist, der mit einer Hydropumpe (41) zur Druckmittelversorgung eines Aktuators (43) versehen ist, wobei der durch die Hydropumpe (41) erzeugte Druck mittels des Aktuators (43) eine Bewegung einer Arbeitskinematik der mobilen Arbeitsmaschine ermöglicht.

**8.** Verfahren nach einem der Ansprüche 1 bis 7, wobei in dem Schritt c. die Berechnung der Soll-Leistung für jeden Leistungsteilnehmer durch eine Multiplikation des jeweiligen Leistungsfaktors *(facV_x)* und der jeweiligen angeforderten Leistung ermittelt wird.

**9.** Verfahren nach einem der Ansprüche 1 bis 8, wobei die Summe der dem jeweiligen Leistungsteilnehmer zugeordneten Priorisierungsfaktoren (Pr _x) einer vollen Einheit entspricht.

**10.** Verfahren nach einem der Ansprüche 1 bis 9, wobei die jeweilige Priorisierungsfunktion den Leistungsfaktor *(facV_x)* für den jeweiligen Leistungsteilnehmer mit der folgenden Formel berechnet:

$$facV\_x = 1 - fac_{LLC} * (1 - \mathrm{Pr}\_x)$$

wobei *facV x* der jeweilige Leistungsfaktor, $fac_{LLC}$ der Belastungsfaktor, *Pr_x* der jeweilige Priorisierungsfaktor ist.

**11.** Verfahren nach einem der Ansprüche 1 bis 10, wobei der Belastungsfaktor $(fac_{LLC})$ gleich null ist, wenn die Soll-Drehzahl des Verbrennungsmotors kleiner als eine aktuelle Drehzahl ist, sodass die Soll-Leistung für jeden Leistungsteilnehmer (4, 6, 8) der jeweiligen angeforderten Leistung entspricht.

**12.** Verfahren nach einem der Ansprüche 1 bis 11, wobei da Verfahren weiterhin den folgenden Schritt umfasst:
d. Festlegen des dem jeweiligen Leistungsteilnehmer zugeordneten Priorisierungsfaktors (Pr_x).

**13.** Recheneinheit, (16) die dazu eingerichtet ist, ein Verfahren nach einem der vorstehenden Ansprüche durchzuführen.

**14.** Computerprogramm, das eine Recheneinheit veranlasst, ein Verfahren nach einem der Ansprüche 1 bis 11 durchzuführen, wenn es auf der Recheneinheit ausgeführt wird.

**15.** Maschinenlesbares Speichermedium mit einem darauf gespeicherten Computerprogramm nach Anspruch 14.

**Claims**

**1.** Method for controlling a mobile working machine, wherein the working machine is provided with at least two power participants (4, 6, 8) that are each configured to receive energy from a motor (2) and convert it into a work task and/or into a driving task of the working machine, **characterized in that** the method comprises the following steps:

   a. ascertaining a load on the motor (2) in the form of a load factor $(fac_{LLC})$;
   b. calculating a power factor *(facV_x)* for each power participant (4, 6, 8), wherein the power factor *(facV_x)* is calculated by means of a prioritization function assigned to the respective power participant (4, 6, 8), wherein the respective prioritization function can ascertain a value for the power factor *(facV_x)* based on the ascertained load factor $(fac_{LLC})$ and a prioritization factor (Pr_x) assigned to the respective power participant;
   c. calculating a target power for each power participant (4, 6, 8) on the basis of the respective power factor *(facV_x)* and a respective requested power.

**2.** Method according to Claim 1, wherein the load is ascertained on the basis of a difference between a current speed ($n_{ist}$) and a target speed ($n_{Soll}$) of the motor (2).

**3.** Method according to either of Claims 1 and 2, wherein the motor (2) is an electric motor.

**4.** Method according to either of Claims 1 and 2, wherein the motor (2) is an internal combustion engine.

**5.** Method according to one of Claims 1 to 4, wherein at least one of the at least two power participants (4, 6, 8) is a driving load (6) that is provided with a hydraulic pump (61) for supplying pressure medium to a hydraulic motor (62) that is able to be coupled to an output (63), wherein the pressure generated by the hydraulic pump (61) allows movement along a direction of travel of the mobile working machine by means of the hydraulic motor (62).

6. Method according to one of Claims 1 to 5, wherein at least one of the at least two power participants (4, 6, 8) is a working load (8) that comprises an electric motor (81).

7. Method according to one of Claims 1 to 6, wherein at least one of the at least two power participants (4, 6, 8) is a working load (4) that is provided with a hydraulic pump (41) for supplying pressure medium to an actuator (43), wherein the pressure generated by the hydraulic pump (41) allows a working kinematics system of the mobile working machine to move by means of the actuator (43).

8. Method according to one of Claims 1 to 7, wherein, in step c., the calculation of the target power for each power participant is ascertained by multiplying the respective power factor *(facV_x)* and the respective requested power.

9. Method according to one of Claims 1 to 8, wherein the sum of the prioritization factors (Pr _x) assigned to the respective power participant corresponds to a full unit.

10. Method according to one of Claims 1 to 9, wherein the respective prioritization function calculates the power factor *(facV_x)* for the respective power participant using the following formula:

$$facV\_x = 1 - fac_{LLC} * (1 - Pr\_x)$$

where *facV_x* is the respective power factor, *fac$_{LLC}$* is the load factor, and Pr_x is the respective prioritization factor.

11. Method according to one of Claims 1 to 10, wherein the load factor *(fac$_{LLC}$)* is equal to zero if the target speed of the internal combustion engine is less than a current speed, and therefore the target power for each power participant (4, 6, 8) corresponds to the respective requested power.

12. Method according to one of Claims 1 to 11, wherein the method furthermore comprises the following step:
d. defining the prioritization factor (Pr_x) assigned to the respective power participant.

13. Computing unit (16) that is configured to carry out a method according to one of the preceding claims.

14. Computer program that causes a computing unit to carry out a method according to one of Claims 1 to 11 when it is executed on the computing unit.

15. Machine-readable storage medium with a computer program according to Claim 14 stored thereon.

**Revendications**

1. Procédé permettant de commander une machine de travail mobile, la machine de travail étant pourvue d'au moins deux consommateurs de puissance (4, 6, 8) qui sont respectivement configurés pour recevoir de l'énergie à partir d'un moteur (2) et pour la convertir en une tâche de travail et/ou en une tâche de conduite de la machine de travail, **caractérisé en ce que** le procédé comprend les étapes suivantes consistant à :

a. déterminer une charge du moteur (2) sous la forme d'un facteur de charge *(fac$_{LLC}$)* ;
b. calculer un facteur de puissance *(facV_x)* pour chaque consommateur de puissance (4, 6, 8), dans lequel le facteur de puissance *(facV_x)* est calculé au moyen d'une fonction de priorisation associée au consommateur de puissance (4, 6, 8) respectif, dans lequel la fonction de priorisation respective peut déterminer une valeur pour le facteur de puissance *(facV_x)* en fonction du facteur de charge *(fac$_{LLC}$)* déterminé et d'un facteur de priorisation (Pr_x) associé au consommateur de puissance respectif ;
c. calculer une puissance de consigne pour chaque consommateur de puissance (4, 6, 8) sur la base du facteur de puissance *(facV_x)* respectif et d'une puissance respectivement demandée.

2. Procédé selon la revendication 1, dans lequel la charge est déterminée sur la base d'une différence entre une vitesse de rotation actuelle (n$_{ist}$) et une vitesse de rotation de consigne (n$_{Soll}$) du moteur (2).

3. Procédé selon l'une quelconque des revendications 1 ou 2, dans lequel le moteur (2) est un moteur électrique.

4. Procédé selon l'une quelconque des revendications 1 ou 2, dans lequel le moteur (2) est un moteur thermique.

5. Procédé selon l'une quelconque des revendications 1 à 4, dans lequel au moins l'un des au moins deux consommateurs de puissance (4, 6, 8) est un consommateur de conduite (6) qui est pourvu d'une pompe hydraulique (61) pour alimenter en fluide sous pression un moteur hydraulique (62) pouvant être couplé à un entraînement (63), dans lequel la pression produite par la pompe hydraulique (61) permet au moyen du moteur hydraulique (62) un mouvement le long d'un sens de la marche de la machine de travail mobile.

6.  Procédé selon l'une quelconque des revendications 1 à 5, dans lequel au moins l'un des au moins deux consommateurs de puissance (4, 6, 8) est un consommateur de travail (8) qui comprend un moteur électrique (81).

7.  Procédé selon l'une quelconque des revendications 1 à 6, dans lequel au moins l'un des au moins deux consommateurs de puissance (4, 6, 8) est un consommateur de travail (4) qui est pourvu d'une pompe hydraulique (41) pour alimenter en fluide sous pression un actionneur (43), dans lequel la pression produite par la pompe hydraulique (41) permet au moyen de l'actionneur (43) un mouvement de la cinématique de travail de la machine de travail mobile.

8.  Procédé selon l'une quelconque des revendications 1 à 7, dans lequel à l'étape c, le calcul de la puissance de consigne est déterminée pour chaque consommateur de puissance par une multiplication du facteur de puissance ($facV\_x$) respectif et de la puissance demandée respective.

9.  Procédé selon l'une quelconque des revendications 1 à 8, dans lequel la somme des facteurs de priorisation (Pr_x) associés au consommateur de puissance respectif correspond à une unité entière.

10. Procédé selon l'une quelconque des revendications 1 à 9, dans lequel la fonction de priorisation respective calcule le facteur de puissance ($facV\_x$) pour le consommateur de puissance respectif à l'aide de la formule suivante :

$$facV\_x = 1 - fac_{LLC} * (1 - Pr\_x)$$

où $facV\_x$ est le facteur de puissance respectif, $fac_{LLC}$ est le facteur de charge, Pr_x est le facteur de priorisation respectif.

11. Procédé selon l'une quelconque des revendications 1 à 10, dans lequel le facteur de charge ($fac_{LLC}$) est égal à zéro lorsque la vitesse de rotation de consigne du moteur thermique est inférieure à une vitesse de rotation actuelle de sorte que la puissance de consigne pour chaque consommateur de puissance (4, 6, 8) correspond à la puissance demandée respective.

12. Procédé selon l'une quelconque des revendications 1 à 11, dans lequel le procédé comprend en outre l'étape suivante consistant à :
    d. définir le facteur de priorisation (Pr_x) associé au consommateur de puissance respectif.

13. Unité de calcul (16), configurée pour exécuter un procédé selon l'une quelconque des revendications précédentes.

14. Programme informatique, qui amène une unité de calcul à effectuer un procédé selon l'une quelconque des revendications 1 à 11 lorsqu'il est exécuté sur l'unité de calcul.

15. Support de stockage lisible par machine, comprenant un programme informatique selon la revendication 14 stocké sur celui-ci.

**Fig. 1**

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013214732 A1